# EUROPÄISCHE PATENTSCHRIFT

(11) **EP 4 495 449 B1**
(45) Veröffentlichungstag und Bekanntmachung des Hinweises auf die Patenterteilung: **31.12.2025**
(21) Anmeldenummer: 23186759.9
(22) Anmeldetag: 20.07.2023
(51) Int. Cl.: F16D 65/00

(54) **FAHRZEUGBREMSSTAUB-SAMMELEINRICHTUNG UND FAHRZEUGBREMSEINRICHTUNG**
VEHICLE BRAKE DUST COLLECTING DEVICE AND VEHICLE BRAKE DEVICE
DISPOSITIF DE COLLECTE DE POUSSIÈRE DE FREIN DE VÉHICULE ET DISPOSITIF DE FREINAGE DE VÉHICULE

(43) Veröffentlichungstag der Anmeldung: 22.01.2025
(73) Patentinhaber: Ostfalia Hochschule Für Angewandte Wissenschaften Hochschule Braunschweig/Wolfenbüttel, 38302 Wolfenbüttel (DE)
(72) Erfinder: KLINGE, Falk, 38667 Bad Harzburg (DE)
(74) Vertreter: REHBERG HÜPPE + PARTNER

(56) Entgegenhaltungen:
- WO-A1-2015/199412
- WO-A1-2021/083629
- DE-B4- 102019 133 772
- GB-A- 2 515 063
- US-A1- 2018 031 059
- US-A1- 2022 402 297

## Beschreibung

### TECHNISCHES GEBIET DER ERFINDUNG

Bremsen von Fahrzeugen (insbesondere PKW, LKW, Motorräder, Busse, Flugzeuge oder Schienenfahrzeuge) erzeugen bei einem Bremsvorgang infolge des Reibkontakts zwischen einem Bremsbelag und einer Bremsscheibe Bremsstaub, der als unerwünschter Feinstaub in die Umwelt abgegeben wird. 2022 wurde die Euro-7-Norm veröffentlicht, die zukünftig auch für Bremsstaub verbindliche Grenzwerte vorgeben wird. Dies setzt den Einsatz von Fahrzeugbremsstaub-Sammeleinrichtungen voraus, mittels welcher in der Luft enthaltener Bremsstaub (insbesondere mit einem Filter) abgeschieden und einer Sammelkammer zugeführt wird. Derartige Fahrzeugbremsstaub-Sammeleinrichtungen müssen unmittelbar hinter dem Reibkontakt zwischen dem Bremsbelag und der Bremsscheibe angeordnet werden, wobei eine Abdichtung zwischen einem Gehäuse der Fahrzeugbremsstaub-Sammeleinrichtung und der Bremsscheibe erforderlich ist, um zu vermeiden, dass der Bremsstaub unter Umgehung des Filters und der Sammelkammer aus der Fahrzeugbremsstaub-Sammeleinrichtung in die Umwelt gelangt.

### STAND DER TECHNIK

DE 10 2019 133 772 B4 offenbart eine Fahrzeugbremsstaub-Sammeleinrichtung, bei der ein Gehäuse als Abdeckhaube ausgebildet ist, die über einen Abstreifer gegenüber der Bremsscheibe abgedichtet ist. In Bewegungsrichtung der Bremsscheibe ist dem Abstreifer eine Trenneinrichtung vorgeordnet, die die Grenzschicht der Bremsscheibe mit dem darin transportierten Bremsstaub von der Bremsscheibe ablösen soll. Die Trenneinrichtung verfügt dabei über eine Ausblaseinrichtung mit einem Ausblaskanal, welcher entgegengesetzt zur Strömung der Grenzschicht unter einem spitzen Winkel auf die Bremsscheibe gerichtet ist. Aus dem Ausblaskanal auf die Bremsscheibe auftreffende strömende Luft löst die Grenzschicht ab, die dann über eine Absaugeinrichtung einem Filter mit einem Sammelbehälter zugeführt wird. Hier schließt die Abdeckhaube vollständig den Bremssattel mit den Bremsbelägen ein.

DE 10 2020 105 240 B4 schlägt vor, dass sich eine Abdeckhaube einer Fahrzeugbremsstaub-Sammeleinrichtung zumindest über einen Umfangswinkel von 60 Grad in Bewegungsrichtung der Bremsscheibe hinter dem Bremsbelag erstreckt. Zwischen der Abdeckhaube und dem von der Abdeckhaube abgedeckten Kreisringsegment der Bremsschreibe hinter dem Bremsbelag bilden die Abdeckhaube und die Bremsscheibe einen beidseitig offenen kreisringsegmentförmigen Strömungskanalabschnitt aus. DE 10 2020 105 240 B4 schlägt vor, in dem Strömungskanalabschnitt einen Wirbelgenerator anzuordnen. Die Längsachse des Wirbelgenerators ist vertikal zur Umfangsrichtung und parallel zur Drehachse der Bremsscheibe orientiert, so dass der Wirbelgenerator in den Strömungskanalabschnitt hineinragt und umströmt wird. In einem Querschnitt ist der Wirbelgenerator ähnlich einem Profil einer Tragfläche ausgebildet. Der Wirbelgenerator erzeugt Wirbel, bei denen eine Umfangs-Strömungskomponente überlagert ist mit einer Wirbel-Strömungskomponente, deren Wirbelachse parallel zur Drehachse der Bremsscheibe orientiert ist. Mittels der derart erzeugten verwirbelten Strömung in dem Strömungskanalabschnitt soll an der Bremsscheibe abgelagerter Bremsstaub abgelöst werden.

DE 10 2020 105 241 B4 offenbart eine Fahrzeugbremsstaub-Sammeleinrichtung, bei welcher ein entsprechend hinter einem Bremsbelag gebildeter Strömungskanal zur Erhöhung der Strömungsgeschwindigkeit sich verringernde Höhe aufweist. Mittels einer eng benachbart der Bremsscheibe angeordneten Schneide wird die auf diese Weise beschleunigte Grenzschicht mit darin aufgenommenem Bremsstaub von der Bremsscheibe abgelöst und einem Auslasskanal zugeführt. Der Auslasskanal ist S-förmig ausgebildet, so dass die abgelöste Grenzschicht mit dem Bremsstaub mehrfach umgelenkt wird. Infolge der Umlenkungen kann sich der Bremsstaub an den Wandungen des S-förmigen Auslasskanals ablagern.

### AUFGABE DER ERFINDUNG

Der vorliegenden Erfindung liegt die Aufgabe zugrunde, eine Fahrzeugbremsstaub-Sammeleinrichtung vorzuschlagen, die insbesondere hinsichtlich
- der Abdichtung zwischen einem Gehäuse einer Fahrzeugbremsstaub-Sammeleinrichtung und einer Bremsscheibe und/oder
- der Trennung der Bremsstaub enthaltenden Grenzschicht von einer Bremsscheibe und/oder
- der Wirksamkeit auch bei einem Verschleiß der Bremsscheibe und/oder
- einer Kühlung der Bremsscheibe und/oder
- einer Vermeidung eines Verschleißes einer Abdichtung gegenüber der Bremsscheibe
verbessert ist. Des Weiteren liegt der Erfindung die Aufgabe zugrunde, eine entsprechend verbesserte Fahrzeugbremseinrichtung vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Fahrzeugbremsstaub-Sammeleinrichtung vor, die Einsatz findet für ein Sammeln und/oder ein Absaugen von Bremsstaub im Bereich einer Bremsscheibe. Die Fahrzeugbremsstaub-Sammeleinrichtung verfügt über ein Gehäuse, welches auch gemäß dem Stand der Technik als Absaughaube ausgebildet sein kann. Die Fahrzeugbremsstaub-Sammeleinrichtung kann einem Bremssattel mit dem Bremsbelag nachgeordnet sein. Möglich ist auch, dass der Bremssattel mit dem Bremsbelag und die Fahrzeugbremsstaub-Sammeleinrichtung eine Baueinheit bilden mit einer die Baueinheit überdeckenden Abdeckhaube.

Ein Innenraum der Fahrzeugbremsstaub-Sammeleinrichtung, in welchem die erforderlichen Komponenten der Fahrzeugbremsstaub-Sammeleinrichtung wie eine Absaugeinrichtung, ein Filter und/oder eine Ausblaseinrichtung angeordnet sein können, ist von einer Spaltbegrenzungsfläche umgeben, die gemeinsam mit der Bremsscheibe einen umlaufenden Dichtspalt begrenzt. Hierbei kann die Spaltbegrenzungsfläche der Fahrzeugbremsstaub-Sammeleinrichtung mit einer Dichtung ausgebildet sein, welche unmittelbar an der Bremsscheibe anliegt. Vorzugsweise ist die Spaltbegrenzungsfläche aber von einer mit einem kleinen Abstand von der Bremsscheibe ausgebildeten Innenfläche einer Gehäusewandung des Gehäuses oder der Abdeckhaube ausgebildet.

Die Erfindung schlägt vor, dass die Fahrzeugbremsstaub-Sammeleinrichtung eine Torus-Wirbelkammer aufweist. Die Torus-Wirbelkammer ist (bei einer Draufsicht auf die Bremsfläche der Bremsscheibe, mit welcher die Fahrzeugbremsstaub-Sammeleinrichtung in Wirkverbindung tritt, mit einer Blickrichtung parallel zur Drehachse der Bremsscheibe) innenliegend von der Spaltbegrenzungsfläche angeordnet, wobei die Torus-Wirbelkammer vorzugsweise unmittelbar benachbart radial innenliegend von der Spaltbegrenzungsfläche angeordnet ist. Die Torus-Wirbelkammer erstreckt sich somit entlang der Spaltbegrenzungsfläche und des von der Spaltbegrenzungsfläche gebildeten Dichtspaltes.

Die in der Torus-Wirbelkammer gebildeten Wirbel haben einen positiven Einfluss auf die Strömungsverhältnisse in Strömungsrichtung vor und/oder hinter dem Dichtspalt und unter Umständen auch in dem Dichtspalt selber. Hierbei wird die Torus-Wirbelkammer vorzugsweise mit Wirbeln mit einem komplexen Strömungsverlauf entsprechend der Torusform durchströmt, wobei dieser komplexe Strömungsverlauf im Rahmen der Erfindung vorteilhaft genutzt wird.

Vorzugsweise wird in der Torus-Wirbelkammer eine Wirbelströmung erzeugt, die sich infolge einer Überlagerung von (mindestens) zwei Strömungskomponenten ergibt. Hierbei ist eine Umfangs-Strömungskomponente in Umfangsrichtung der Torus-Wirbelkammer orientiert, wobei die Umfangs-Strömungskomponente bspw. der Innenkontur der Spaltbegrenzungsfläche und des Dichtspalts folgen kann. Eine weitere Strömungskomponente, nämlich eine Wirbel-Strömungskomponente, in grober Vereinfachung kreis-, wirbel- oder spiralförmig um die Umfangsrichtung der Torus-Wirbelkammer orientiert, so dass die Wirbel-Strömungskomponente in einem Querschnitt der Torus-Wirbelkammer, dessen Schnittführung vertikal zu der Umfangsrichtung erfolgt, zirkuliert und durch die Formgebung der Torus-Wirbelkammer in dem Querschnitt geführt wird. Die Wirbel-Strömungskomponente ist im Eintrittsbereich der Bremsscheibe in das Gehäuse (und vorbei an der Spaltbegrenzungsfläche des Gehäuses) in Bewegungsrichtung der Bremsscheibe orientiert. Somit unterstützt die Wirbel-Strömungskomponente in dem Eintrittsbereich den Eintritt der Luft und damit auch des Bremsstaubs in die Fahrzeugbremsstaub-Sammeleinrichtung, so dass die Gefahr reduziert ist, dass der Bremsstaub gar nicht in die Fahrzeugbremsstaub-Sammeleinrichtung gelangt. Möglich ist auch, dass im Eintrittsbereich die Wirbel-Strömungskomponente die Ablösung der Grenzschicht mit dem darin enthaltenen Bremsstaub herbeiführt oder unterstützt. Des Weiteren ist die Wirbel-Strömungskomponente um den Querschnitt der Torus-Wirbelkammer im Austrittsbereich der Bremsscheibe aus dem Gehäuse (und im Bereich oder vor der Spaltbegrenzungsfläche und dem Dichtspalt) entgegen der Bewegungsrichtung der Bremsscheibe orientiert. Hat die Bremsscheibe das Bestreben, nicht von der Fahrzeugbremsstaub-Sammeleinrichtung abgeschiedenen Bremsstaub mit der Grenzschicht aus dem Austrittsbereich in die Umwelt zu führen, kann die entgegengesetzte Wirbel-Strömungskomponente diese unerwünschte Förderung des Bremsstaubs in die Umgebung zumindest reduzieren. Vorzugsweise trifft die Wirbel-Strömungskomponente im Austrittsbereich auf die Grenzschicht, löst die Grenzschicht zumindest teilweise ab und führt die zumindest teilweise abgelöste Grenzschicht mit dem darin enthaltenen Bremsstaub einer Sammelkammer, einem Filter und/oder einer Absaugeinrichtung zu. Auf diese Weise kann der Wirkungsgrad der Fahrzeugbremsstaub-Sammeleinrichtung erhöht werden. Alternativ oder kumulativ kann die Wirbel-Strömungskomponente in dem Austrittsbereich auch dazu führen, dass an der Bremsscheibe abgelagerter Bremsstaub abgelöst wird. Alternativ oder kumulativ möglich ist, dass die Wirbel-Strömungskomponente sowohl im Eintrittsbereich der Bremsscheibe als auch im Austrittsbereich der Bremsscheibe aus dem Gehäuse zu einer Kühlung der Bremsscheibe führt. Möglich ist auch, dass die Wirbelströmung vorzugsweise nur aus "sauberer Umgebungsluft", die keinen Bremsstaub beinhaltet, gebildet wird.

Grundsätzlich kann der Querschnitt der Torus-Wirbelkammer in Umfangsrichtung konstant sein oder sich beliebig verändern. Für einen besonderen Vorschlag der Erfindung ist der Querschnitt der Torus-Wirbelkammer im Eintrittsbereich der Bremsscheibe in das Gehäuse größer als im Austrittsbereich der Bremsscheibe aus dem Gehäuse. Durch die Gestaltung der Geometrie kann die Geschwindigkeit der Wirbel-Strömungskomponente beeinflusst werden, womit wiederum Einfluss auf die zuvor genannten, erfindungsgemäß angestrebten Effekte genommen werden kann.

Für den Querschnitt und/oder Querschnittsverlauf der Torus-Wirbelkammer gibt es im Rahmen der Erfindung vielfältige Möglichkeiten. Für einen Vorschlag der Erfindung ist der Querschnitt der Torus-Wirbelkammer zumindest im Eintrittsbereich der Bremsscheibe in das Gehäuse und/oder zumindest im Austrittsbereich der Bremsscheibe aus dem Gehäuse kreisbogenförmig, konkav oder kurvenförmig ausgebildet. Entlang der kreisbogenförmigen, konkaven oder kurvenförmigen Begrenzung der Torus-Wirbelkammer wird die Wirbel-Strömungskomponente um den Querschnitt der Torus-Wirbelkammer geführt.

Für eine erste Variante der Erfindung ist der Querschnitt der Torus-Wirbelkammer (zumindest entlang eines Teilumfangs der Torus-Wirbelkammer, im Eintrittsbereich und/oder im Austrittsbereich) bis auf eine Öffnung in Richtung der Bremsscheibe randgeschlossen ausgebildet. Über die Öffnung kann dann die Strömung in der Torus-Wirbelkammer mit der Bremsscheibe und der Grenzschicht der Bremsscheibe in Wirkverbindung treten.

Für eine andere Variante der Erfindung ist die Torus-Wirbelkammer neben der Öffnung in Richtung der Bremsscheibe mit einer weiteren Öffnung ausgestattet, die mit einer Einblaseinrichtung oder einer Absaugeinrichtung verbunden ist. Mittels der Einblaseinrichtung und/oder Absaugeinrichtung wird über die Öffnung Einfluss genommen auf die Druckverhältnisse in der Torus-Wirbelkammer. Hierbei erzeugt die Einblaseinrichtung oder die Absaugeinrichtung im Bereich der Öffnung einen derartigen Druck und/oder eine derartige Strömung, dass die Strömung in der Torus-Wirbelkammer in vorteilhafter Wirkung beeinflusst wird. Vorzugsweise unterstützen die Einblaseinrichtung oder die Absaugeinrichtung und die hierdurch im Bereich der Öffnung erzeugten Druckverhältnisse und/oder die Durchströmung der Öffnung die Ausbildung der Wirbel-Strömungskomponente. Zu diesem Zweck kann beispielsweise die weitere Öffnung so angeordnet sein, dass die von der Einblaseinrichtung und/oder der Absaugeinrichtung erzeugte Strömung tangential zu der Wirbel-Strömungskomponente orientiert ist, womit die Wirbel-Strömungskomponente unterstützt und verstärkt werden kann.

Gemäß einem weiteren Vorschlag ist in einer erfindungsgemäßen Fahrzeugbremsstaub-Sammeleinrichtung die Torus-Wirbelkammer im Austrittsbereich [oder für eine andere Variante im Eintrittsbereich] mit einer Zunge oder Schneide ausgestattet, die eng benachbart der Bremsscheibe angeordnet ist und entgegengesetzt zur Bewegungsrichtung der Bremsscheibe [oder für die andere Variante in Bewegungsrichtung der Bremsscheibe] orientiert ist. Im Bereich dieser Zungen oder Schneiden erfolgt die Wechselwirkung zwischen der Bremsscheibe und der Grenzschicht derselben mit der Strömung in der Torus-Wirbelkammer. Vorzugsweise schließt die Öffnung der Torus-Wirbelkammer, über die die Torus-Wirbelkammer in Richtung der Bremsscheibe geöffnet ist, unmittelbar an die Zunge oder Schneide an.

Für einen Vorschlag der Erfindung entspricht eine Umfangsachse der Torus-Wirbelkammer in einer Draufsicht in grober Näherung der Außengeometrie eines Kreisringsegments, dessen Mittelpunkt mit der Drehachse der Bremsscheibe zusammenfällt.

Möglich ist, dass ein in Bewegungsrichtung der Bremsscheibe vorderer Rand der Torus-Wirbelkammer und/oder ein in Bewegungsrichtung der Bremsscheibe hinterer Rand der Torus-Wirbelkammer radial zur Drehachse der Bremsscheibe orientiert ist. Im Bereich dieses Randes tritt die Bremsscheibe mit der Grenzschicht mit der Fahrzeugbremsstaub-Sammeleinrichtung in Wirkverbindung. Möglich ist auch, dass ein radial äußerer Rand und/oder ein radial innerer Rand der Torus-Wirbelkammer konzentrisch zu der Drehachse der Bremsscheibe sind, womit sich die Bremsscheibe und deren Grenzschicht tangential zu diesen radialen Rändern bewegen und kein wesentlicher Eintrag der Grenzschicht über diese Ränder erfolgt. Für einen weiteren Vorschlag der Erfindung wird gerade ein derartiger Eintrag für einen besonderen Effekt genutzt: In diesem Fall sind der radial äußere Rand und/oder der radial innere Rand der Torus-Wirbelkammer nicht konzentrisch zu der Drehachse der Bremsscheibe, sondern unter einem Neigungswinkel geneigt. Dies hat zur Folge, dass über die rotierende Bremsscheibe ein Eintrag der Grenzschicht in die Torus-Wirbelkammer erfolgt. Je nach Neigungswinkel erfolgt ein derartiger Eintrag mit einer Eintragskomponente, die in Richtung der Umfangsachse der Torus-Wirbelkammer orientiert ist, sowie mit einer anderen Eintragskomponente, die wirbelartig um die Umfangsachse der Torus-Wirbelkammer orientiert ist. Auf diese Weise kann einerseits eine Förderung in der Torus-Wirbelkammer in Umfangsrichtung derselben und damit der Umfangs-Strömungskomponente und andererseits um den Querschnitt der Torus-Wirbelkammer und damit der Wirbel-Strömungskomponente herbeigeführt und/oder unterstützt werden. Vorzugsweise wird diese Förderung in die Torus-Wirbelkammer ermöglicht und/oder unterstützt dadurch, dass in der Fahrzeugbremsstaub-Sammeleinrichtung ein Unterdruck herrscht, der durch die Absaugeinrichtung und/oder die Relativbewegung der Bremsscheibe gegenüber der Fahrzeugbremsstaub-Sammeleinrichtung hervorgerufen sein kann.

Eine weitere Lösung der der Erfindung zugrunde liegenden Aufgabe stellt eine Fahrzeugbremseinrichtung dar. Die Fahrzeugbremseinrichtung verfügt über eine Fahrzeugbremse mit einem Bremsbelag, der an einem Bremssattel gehalten ist, und mit einer Bremsscheibe. Die Fahrzeugbremse weist einen Aktuator auf, mit dem die Bremsbeläge zur Erzeugung einer Bremswirkung gegen die Bremsscheibe gedrückt werden kann. Die erfindungsgemäße Fahrzeugbremseinrichtung weist des Weiteren eine Fahrzeugbremstaub-Sammeleinrichtung auf, wie diese zuvor beschrieben ist. Die Fahrzeugbremsstaub-Sammeleinrichtung ist in Bewegungsrichtung der Bremsscheibe hinter der Fahrzeugbremse angeordnet. Auf diese Weise kann die Fahrzeugbremsstaub-Sammeleinrichtung Bremsstaub, der in der Fahrzeugbremse entsteht, absondern und sammeln.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert in einer Draufsicht eine Fahrzeugbremsrichtung mit einer Fahrzeugbremse und einer Fahrzeugbremsstaub-Sammeleinrichtung.
- **Fig. 2**: zeigt schematisiert in einer Draufsicht die Fahrzeugbremsstaub-Sammeleinrichtung gemäß Fig. 1 mit einer Spaltbegrenzungsfläche und einer Torus-Wirbelkammer.
- **Fig. 3**: zeigt einen Schnitt III-III durch eine Fahrzeugbremsstaub-Sammeleinrichtung mit Bremsscheibe gemäß Fig. 1.

### FIGURENBESCHREIBUNG

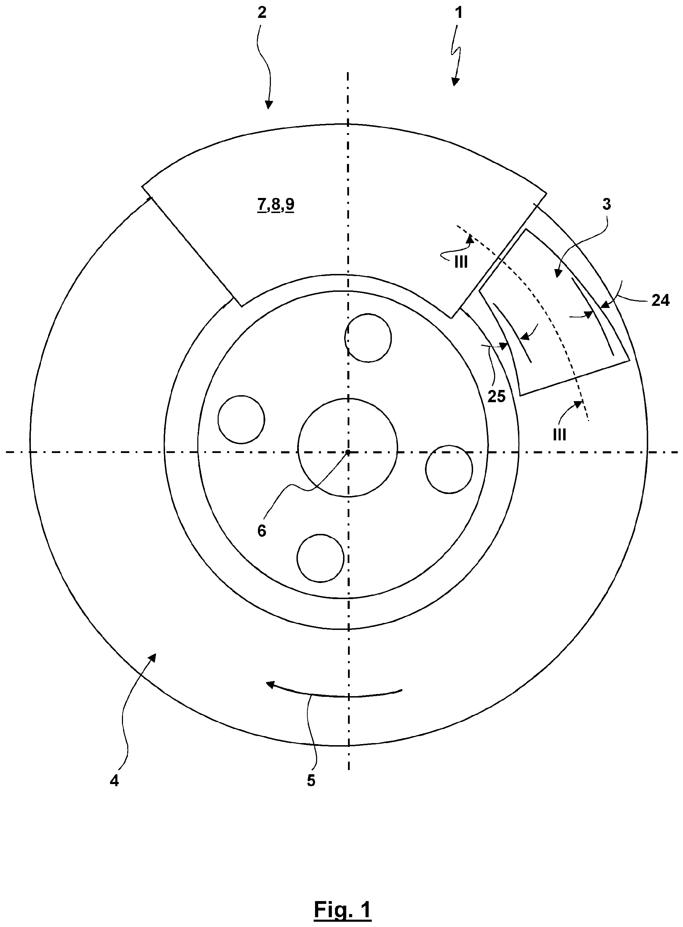

**Fig. 1** zeigt eine Fahrzeugbremseinrichtung 1. Die Fahrzeugbremseinrichtung 1 verfügt über eine Fahrzeugbremse 2 und eine Fahrzeugbremsstaub-Sammeleinrichtung 3. Die Fahrzeugbremse 2 weist eine Bremsscheibe 4 auf, die bei Vorwärtsfahrt des Fahrzeugs in eine Bewegungsrichtung 5 um eine Drehachse 6 rotiert. Des Weiteren verfügt die Fahrzeugbremse 2 über einen Bremssattel 7, im Bereich dessen mittels eines Aktuators 8 ein Bremsbelag 9 gegen die Bremsscheibe 4 gedrückt werden kann (was hier lediglich schematisch dargestellt ist).

In die Bewegungsrichtung 5 hinter dem Bremsbelag 9 (und u. U. auch hinter dem Bremssattel 7) ist die Fahrzeugbremsstaub-Sammeleinrichtung 3 angeordnet, wobei die Fahrzeugbremsstaub-Sammeleinrichtung 3 vorzugsweise einen radialen Bereich teilweise, vollständig oder überlappend abdeckt, innerhalb dessen sich der Bremsbelag 9 erstreckt. Vorzugsweise ist in die Bewegungsrichtung 5 die Fahrzeugbremsstaub-Sammeleinrichtung 3 unmittelbar oder mit einem kleinen Abstand hinter dem Bremsbelag 9 (und u. U. auch hinter dem Bremssattel 7) angeordnet, wobei auch möglich ist, dass die Fahrzeugbremsstaub-Sammeleinrichtung 3 den Bremssattel 7 umschließt oder teilweise umschließt. Möglich ist dabei auch, dass aus dem weitestgehend umschlossenen Bremssattel 7 der Bremssattel 7 aus dem radial außenliegenden Bereich der Fahrzeugbremsstaub-Sammeleinrichtung 3 heraustritt.

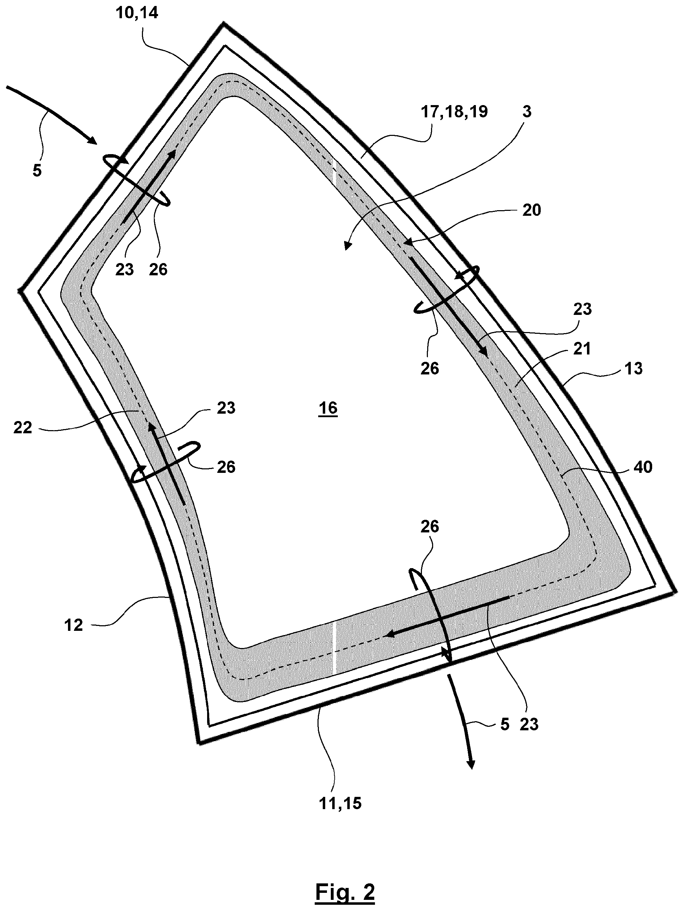

**Fig. 2** zeigt die Fahrzeugbremsstaub-Sammeleinrichtung 3 in einer Draufsicht bei Blickrichtung parallel zur Drehachse 6 in Richtung der Bremsscheibe 4, wobei hier abweichend zu den Zeichenkonventionen innenliegende Kanten und Begrenzungen mit durchgezogenen Linien dargestellt sind. Die Fahrzeugbremsstaub-Sammeleinrichtung 3 verfügt über einen vorderen, dem Bremsbelag 9 zugewandten Rand 10, einen hinteren, dem Bremsbelag 9 abgewandten Rand 11, einen radial inneren Rand 12 und einen radial äußeren Rand 13. Im Bereich des vorderen Randes 10 ist ein Eintrittsbereich 14 gebildet, im Bereich dessen die Bremsscheibe 4 mit der Grenzschicht und davon mitgenommenem Bremsstaub mit der Fahrzeugbremsstaub-Sammeleinrichtung 3 in Wirkverbindung tritt. Die Bremsscheibe 4 tritt dann (im Idealfall ohne den Bremsstaub) in einem von dem hinteren Rand 11 gebildeten Austrittsbereich 15 wieder aus der Fahrzeugbremsstaub-Sammeleinrichtung 3 aus.

Die Fahrzeugbremsstaub-Sammeleinrichtung 3 verfügt über einen Innenraum 16. In dem Innenraum 16 können/kann eine Sammelkammer, mindestens ein Filter, eine Absaugeinrichtung und/oder eine Ausblaseinrichtung angeordnet sein sowie weitere funktional erforderliche Komponenten zur Herbeiführung der Bremsstaub-Sammelwirkung angeordnet sein. Der Innenraum 16 ist von der Umgebung und den Rändern 10, 11, 12, 13 über eine um den Innenraum umlaufende Spaltbegrenzungsfläche 17 und einen zwischen der Spaltbegrenzungsfläche 17 und der Bremsscheibe 4 gebildeten Dichtspalt 27 getrennt. Im Bereich der Spaltbegrenzungsfläche 17 kann ein Gehäuse 18, insbesondere eine Abdeckhaube 19, unmittelbar mit der Bremsscheibe 4 den Dichtspalt 27 ausbilden oder hier kann eine Dichtung vorhanden sein, die an der Bremsscheibe 4 unter Ermöglichung der erforderlichen Relativbewegung anliegt.

Innenliegend von der Spaltbegrenzungsfläche 17 umgibt des Weiteren eine Torus-Wirbelkammer 20, die in Fig. 2 grau gekennzeichnet ist, den Innenraum 16. Die in Umfangsrichtung entlang einer Umfangsachse 40 umlaufende Torus-Wirbelkammer 20 hat einen zumindest in grober Näherung kreisförmigen Querschnitt bei Schnittführung vertikal zur Umfangsachse 40. Hierbei ist die Torus-Wirbelkammer 20 auf der der Bremsscheibe 4 zugewandten Seite ungefähr bündig zu der Spaltbegrenzungsfläche 17 oder dem Dichtspalt 27 angeordnet, während sich von hier die Torus-Wirbelkammer 20 mit ihrem Querschnitt von der Bremsscheibe 4 weg erstreckt.

An dem vorderen Rand 10 tritt die Bremsscheibe mit der Grenzschicht in die Bewegungsrichtung 5 der Bremsscheibe 4 in den Eintrittsbereich 14 ein. Dies hat zur Folge, dass in dem Eintrittsbereich 14 die Strömung der Grenzschicht keine wesentliche Umfangs-Strömungskomponente 23 in Richtung der Umfangsachse 40 erzeugt. Allerdings führt die Bewegung der Bremsscheibe 4 mit der Grenzschicht dazu, dass in der Torus-Wirbelkammer 20 in dem Eintrittsbereich 14 eine Wirbel-Strömungskomponente 26 hervorgerufen oder gestärkt wird.

Sowohl in einem radial außenliegenden Bereich 21 als auch in einem radial innenliegenden Bereich 22 wird die Grenzschicht von der Bremsscheibe 4 in die Bewegungsrichtung 5 in die Torus-Wirbelkammer 20 eingebracht. Da in dem radial außenliegenden Bereich 21 der Radius und damit die Strömungsgeschwindigkeit der Grenzschicht größer ist, überwiegt der hier erfolgende Eintrag von Strömungsenergie dem Eintrag der Strömungsenergie im radial innenliegenden Bereich 22. Der Eintrag der Grenzschicht in die radialen Bereiche 21 führt dazu, dass eine Umfangs-Strömungskomponente 23 hervorgerufen oder gestärkt wird.

Darüber hinaus sind die radialen Bereiche 21, 22 nicht konzentrisch zur Drehachse 6 der Bremsscheibe 4 orientiert. Vielmehr divergiert der radial außenliegende Bereich 21 in Bewegungsrichtung 5 der Bremsscheibe 4 nach außen, während der radial innenliegende Bereich 22 in Bewegungsrichtung 5 der Bremsscheibe 4 radial nach innen divergiert. Dies bedeutet, dass die Grenzschicht der Bremsscheibe 4 unter einem Neigungswinkel 24 in den radial außenliegenden Bereich 21 der Torus-Wirbelkammer 20 eintritt sowie unter einem Neigungswinkel 25 in den radial innenliegenden Bereich 22 der Torus-Wirbelkammer 20 eintritt (vgl. Fig. 1). Diese Neigungswinkel 24, 25 haben zur Folge, dass die Grenzschicht der Bremsscheibe 4 in die Bereiche 21, 22 mit einer Komponente eintritt, die einen Beitrag zur Umfangs-Strömungskomponente 23 in Umfangsrichtung der Torus-Wirbelkammer 20 leistet. Eine andere Komponente der Grenzschicht infolge der Neigungswinkel 24, 25 hat aber zur Folge, dass auch ein Beitrag für die Wirbel-Strömungskomponente 26 entsteht.

Eine insgesamt resultierende Wirbel-Strömungskomponente 26 in der Torus-Wirbelkammer 20 ergibt sich somit aus einer Überlagerung eines Eintritts der Grenzschicht in dem Eintrittsbereich 14 und den sich aus den Neigungswinkeln 24, 25 ergebenden Komponenten des Eintritts der Grenzschicht in die radialen Bereiche 21, 22. Vermindert wird die Wirbel-Strömungskomponente 26 hingegen durch den entgegengesetzt orientierten Energieeintrag der Grenzschicht in dem Austrittsbereich 15.

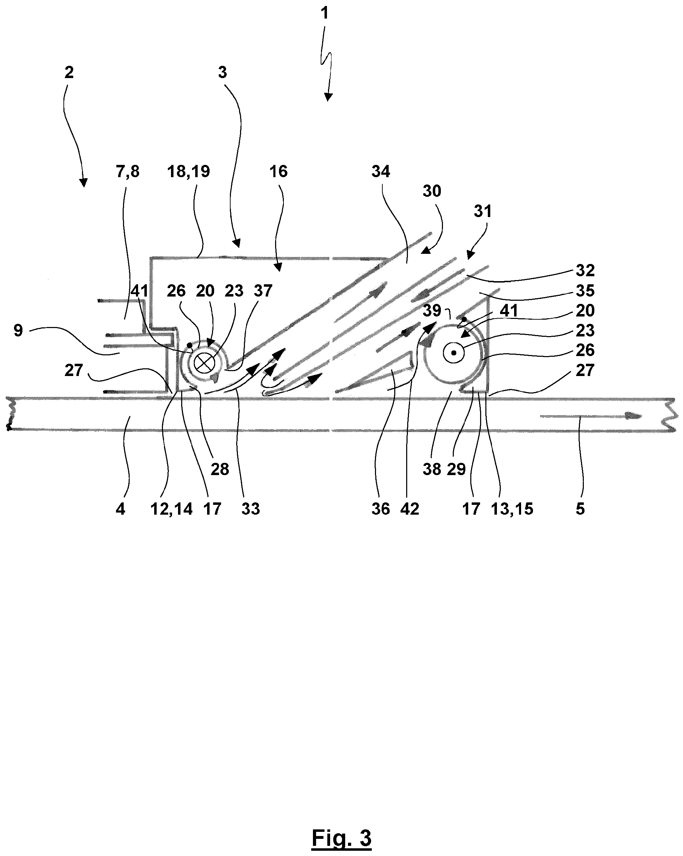

**Fig. 3** zeigt einen stark schematisierten Schnitt III-III bei Schnittführung gemäß Fig. 1 durch die Fahrzeugbremsstaub-Sammeleinrichtung 3.

Zu erkennen ist in Fig. 3, dass in dem Eintrittsbereich 14 die Wirbel-Strömungskomponente 26 in der Torus-Wirbelkammer 20 eine Strömung aufweist, die auf der der Bremsscheibe zugewandten Seite parallel zur Bewegungsrichtung 5 der Bremsscheibe und der Grenzschicht orientiert ist, so dass die Förderbewegung der Bremsscheibe 5 für die Grenzschicht stromabwärts des Bremsbelags 9 durch die Wirbel-Strömungskomponente 26 unterstützt wird und die Zuverlässigkeit des Eintritts des Bremsstaubs in den Innenraum 16 durch die Torus-Wirbelkammer 20 erhöht wird.

Hingegen ist in dem Austrittsbereich 15 die Wirbel-Strömungskomponente 26 auf der der Bremsscheibe 4 zugewandten Seite entgegengesetzt zur Bewegungsrichtung 5 der Bremsscheibe 4 orientiert, so dass ein Austritt der Grenzschicht und von hiervon mitgenommenem Bremsstaub zumindest reduziert ist. Auf diese Weise kann eine Dichtwirkung einer Dichtung, die Teil der Spaltbegrenzungsfläche 17 ist, unterstützt werden. Möglich ist sogar, dass die Spaltbegrenzungsfläche 17 ohne eine die Bremsscheibe 4 kontaktierende Dichtung ausgebildet ist und lediglich ein geringer Dichtspalt 27 zwischen der Spaltbegrenzungsfläche 17 und der Bremsscheibe 4 ausgebildet ist. Es ist sogar möglich, dass eine Dichtwirkung dieses Dichtspalts 27 zumindest begrenzt aufrechterhalten wird selbst dann, wenn sich die Höhe des Dichtspalts 27 infolge eines Verschleißes der Bremsscheibe 4 vergrößert.

In dem Eintrittsbereich 14 grenzt die Torus-Wirbelkammer 20 über eine Zunge oder Schneide 28 an den Dichtspalt 27 an. Entsprechend grenzt die Torus-Wirbelkammer 20 in dem Austrittsbereich 15 über eine Zunge oder Schneide 29 an den Dichtspalt 27 an. Hierbei ist die Zunge 28 in Bewegungsrichtung 5 der Bremsscheibe 4 orientiert, während die Zunge oder Schneide 29 entgegengesetzt zur Bewegungsrichtung 5 der Bremsscheibe 4 orientiert ist.

Fig. 3 zeigt eine optionale Besonderheit der erfindungsgemäßen Fahrzeugbremsstaub-Sammeleinrichtung 3. Hier beinhaltet die Fahrzeugbremsstaub-Sammeleinrichtung 3 eine Absaugeinrichtung 30 und eine Ausblaseinrichtung 31. Die Ausblaseinrichtung 31 verfügt über einen Strömungskanal 32, der mit einer Komponente entgegengesetzt zur Bewegungsrichtung 5 der Bremsscheibe orientiert und unter einem spitzen Winkel geneigt ist und aus dem Luft zur Ablösung der Grenzschicht auf die Bremsscheibe 4 ausgeblasen wird. Die derart abgelöste Grenzschicht 33 mit darin enthaltenem Bremsstaub tritt dann in einen Strömungskanal 34 der Absaugeinrichtung 30 ein. Wie in Fig. 3 dargestellt kann stromabwärts des Strömungskanals 32 der Ausblaseinrichtung 31 ein weiterer Strömungskanal 35 der Absaugeinrichtung 30 angeordnet sein.

Im Bereich der Eintrittsöffnung des Strömungskanals 35 kann eine weitere Zunge oder Schneide 36 angeordnet sein. Hinter der Zunge oder Schneide 36 kann eine Art Hinterschneidung gebildet sein, die Druckverhältnisse zur Folge hat, die wiederum einen Fluidstrom 42 zur Folge haben und zu einer weiteren Stärkung der Wirbel-Strömungskomponente 26 führen können. Des Weiteren strömt in dem Strömungskanal 35 die Luft tangential zur Wirbel-Strömungskomponente 26, womit eine weitere Stärkung der Wirbel-Strömungskomponente 26 herbeigeführt werden kann. Auch die Strömung in dem Strömungskanal 34 ist tangential zu der Wirbel-Strömungskomponente 26 in dem Eintrittsbereich 14 der Torus-Wirbelkammer 20 orientiert, womit eine weitere Stärkung der Wirbel-Strömungskomponente 26 herbeigeführt werden kann.

In Fig. 3 verfügt der Querschnitt der Torus-Wirbelkammer 20 in dem Eintrittsbereich 14 über eine Öffnung 37, die der Bremsscheibe 4 zugewandt ist. Neben der Wechselwirkung der Strömung in der Torus-Wirbelkammer 20 mit der Grenzschicht tritt im Bereich dieser Öffnung 37 die Strömung in der Torus-Wirbelkammer 20 auch in Wirkverbindung mit der Strömung in dem Strömungskanal 34.

Auch in dem Austrittsbereich 15 verfügt die Torus-Wirbelkammer 20 über eine der Bremsscheibe 4 zugewandte Öffnung 38. Über eine weitere Öffnung 39 tritt die Strömung in der Torus-Wirbelkammer 20 auch in Wirkverbindung mit der Strömung in dem Strömungskanal 35.

Zu erkennen ist in Fig. 3 des Weiteren, dass die Torus-Wirbelkammer 20 (zumindest in dem Eintrittsbereich 14 und dem Austrittsbereich 15) eine Begrenzung 41 mit einem kreisbogenförmigen, konkaven Querschnitt aufweist, entlang welchem eine Führung der Wirbel-Strömungskomponente 26 erfolgt.

In Fig. 2 kennzeichnet die Umfangsachse 40 die Erstreckungsrichtung der Torus-Wirbelkammer 20, entlang welcher die Torus-Wirbelkammer 20 mit der Umfangs-Strömungskomponente 23 durchströmt wird. Hingegen beschreibt die Wirbel-Strömungskomponente 26 eine Wirbel- oder Rollbewegung der Strömung in einem Querschnitt der Torus-Wirbelkammer 20 mit Schnittführung vertikal zur Umfangsachse 40, wobei diese Wirbelbewegung und die Wirbel-Strömungskomponente 26 durch die die Torus-Wirbelkammer 20 begrenzende Wandung geführt ist.

Eine maximale radiale Erstreckung der Torus-Wirbelkammer 20 ist an die radiale Erstreckung des Gleitkontakts des Bremsbelages 9 mit der Bremsscheibe 4 angepasst. Vorzugsweise beträgt die maximale radiale Erstreckung der Torus-Wirbelkammer 20
- zwischen 50 % und 150 % (insbesondere zwischen 70 % und 130 %, zwischen 80 % und 120 % oder zwischen 90 % und 110 %) oder
- mehr als 70 %, mehr als 80 %, mehr als 90 % oder mehr als 100 %, mehr als 110 % oder mehr als 150 %
der radialen Erstreckung des Gleitkontakts des Bremsbelags 9 mit der Bremsscheibe 4.

Die Torus-Wirbelkammer 20 kann eine beliebige, u. U. auch unrunde Form aufweisen. Beispielsweise kann die Torus-Wirbel, 20 in grober Näherung die Form eines Donuts aufweisen, wobei der Querschnittsverlauf beliebig sein kann und/oder die Seiten des Donuts abgeplattet und/oder wie erläutert mit einem Neigungswinkel 24, 25 geneigt sein können.

Die Überlagerung der Umfangs-Strömungskomponente 23 und der Wirbel-Strömungskomponente 26 führt dazu, dass sich die Strömung entlang der Umfangsachse 40 um die Torus-Wirbelkammer 20 windet. Die hier vorgenommene Erläuterung mit der Aufteilung der Strömung einerseits in eine Umfangs-Strömungskomponente 23 und eine Wirbel-Strömungskomponente 26 ist aber lediglich für die Erläuterung eines im Rahmen der Erfindung möglichen, aber die Erfindung nicht einschränkenden Effekts erfolgt, während sich in der Anwendung tatsächlich abweichende Strömungsverhältnisse ergeben können, die auch von der Drehzahl der Bremsscheibe 4 abhängig sein können. So ist beispielsweise auch möglich, dass sich keine oder nur eine verhältnismäßig kleine Umfangs-Strömungskomponente 23 ausbildet.

### BEZUGSZEICHENLISTE

- 1: Fahrzeugbremseinrichtung
- 2: Fahrzeugbremse
- 3: Fahrzeugbremsstaub-Sammeleinrichtung
- 4: Bremsscheibe
- 5: Bewegungsrichtung
- 6: Drehachse
- 7: Bremssattel
- 8: Aktuator
- 9: Bremsbelag
- 10: vorderer Rand
- 11: hinterer Rand
- 12: radial innerer Rand
- 13: radial äußerer Rand
- 14: Eintrittsbereich
- 15: Austrittsbereich
- 16: Innenraum
- 17: Spaltbegrenzungsfläche
- 18: Gehäuse
- 19: Abdeckhaube
- 20: Torus-Wirbelkammer
- 21: radial außenliegender Bereich
- 22: radial innenliegender Bereich
- 23: Umfangs-Strömungskomponente
- 24: Neigungswinkel
- 25: Neigungswinkel
- 26: Wirbel-Strömungskomponente
- 27: Dichtspalt
- 28: Zunge oder Schneide im Eintrittsbereich
- 29: Zunge oder Schneide im Austrittsbereich
- 30: Absaugeinrichtung
- 31: Ausblaseinrichtung
- 32: Strömungskanal
- 33: Grenzschicht
- 34: Strömungskanal
- 35: Strömungskanal
- 36: Zunge, Schneide
- 37: Öffnung
- 38: Öffnung
- 39: Öffnung
- 40: Umfangsachse
- 41: Begrenzung
- 42: Fluidstrom

## Patentansprüche

1. Fahrzeugbremsstaub-Sammeleinrichtung (3) für ein Sammeln und/oder ein Absaugen von Bremsstaub im Bereich einer Bremsscheibe (4), mit einem Gehäuse (18), welches eine einen Innenraum (16) umgebende Spaltbegrenzungsfläche (17) aufweist, **gekennzeichnet durch** eine Torus-Wirbelkammer (20), die innenliegend von der Spaltbegrenzungsfläche (17) angeordnet ist.

2. Fahrzeugbremsstaub-Sammeleinrichtung (3) nach Anspruch 1, **dadurch gekennzeichnet, dass**
a) in der Torus-Wirbelkammer (20) eine Wirbelströmung mit einer Überlagerung einer Umfangs-Strömungskomponente (23) und einer Wirbel-Strömungskomponente (26) ausgebildet wird,
b) wobei die Wirbel-Strömungskomponente (26)
ba) in einem Eintrittsbereich (14) der Bremsscheibe (4) in das Gehäuse (18) in Bewegungsrichtung (5) der Bremsscheibe (4) und
bb) in einem Austrittsbereich (15) der Bremsscheibe (4) aus dem Gehäuse (18) entgegen der Bewegungsrichtung (5) der Bremsscheibe (4)
orientiert ist.

3. Fahrzeugbremsstaub-Sammeleinrichtung (3) nach Anspruch 2, **dadurch gekennzeichnet, dass** der Querschnitt der Torus-Wirbelkammer (20) im Eintrittsbereich (14) der Bremsscheibe (4) in das Gehäuse (18) größer ist als im Austrittsbereich (15) der Bremsscheibe (4) aus dem Gehäuse (18).

4. Fahrzeugbremsstaub-Sammeleinrichtung (3) nach Anspruch 2, **dadurch gekennzeichnet, dass** zumindest im Eintrittsbereich (14) der Bremsscheibe (4) in das Gehäuse (18) und/oder zumindest im Austrittsbereich (15) der Bremsscheibe (4) aus dem Gehäuse (18) eine Begrenzung (41) der Torus-Wirbelkammer (20) im Querschnitt kreisbogenförmig, konkav oder kurvenförmig ausgebildet ist.

5. Fahrzeugbremsstaub-Sammeleinrichtung (3) nach einem der vorhergehenden Ansprüche, **dadurch gekennzeichnet, dass** der Querschnitt der Torus-Wirbelkammer (20) zumindest im Eintrittsbereich (14) und/oder im Austrittsbereich (15) bis auf eine Öffnung (37, 38) in Richtung der Bremsscheibe (4) randgeschlossen ausgebildet ist.

6. Fahrzeugbremsstaub-Sammeleinrichtung (3) nach einem der Ansprüche 1 bis 4, **dadurch gekennzeichnet, dass** die Torus-Wirbelkammer (20)
a) eine Öffnung (38) in Richtung der Bremsscheibe (4) aufweist und
b) eine Öffnung (39) aufweist, die mit einer Ausblaseinrichtung (31) oder einer Absaugeinrichtung (30) verbunden ist.

7. Fahrzeugbremsstaub-Sammeleinrichtung (3) nach einem der Ansprüche 2-6, **dadurch gekennzeichnet, dass**
a) die Torus-Wirbelkammer (20) im Austrittsbereich (15) eine Zunge oder Schneide aufweist, die eng benachbart der Bremsscheibe (4) angeordnet ist und entgegengesetzt zur Bewegungsrichtung (5) der Bremsscheibe (4) orientiert ist, und/oder
b) die Torus-Wirbelkammer (20) im Eintrittsbereich (14) eine Zunge oder Schneide aufweist, die eng benachbart der Bremsscheibe (4) angeordnet ist und in Bewegungsrichtung der Bremsscheibe (4) orientiert ist.

8. Fahrzeugbremsstaub-Sammeleinrichtung (3) nach einem der vorhergehenden Ansprüche, **dadurch gekennzeichnet, dass** eine Umfangsachse (40) der Torus-Wirbelkammer (20) in einer Draufsicht in grober Näherung der Außengeometrie eines Kreisringsegments entspricht.

9. Fahrzeugbremsstaub-Sammeleinrichtung (3) nach einem der vorhergehenden Ansprüche, **dadurch gekennzeichnet, dass** ein radial äußerer Rand (13) und/oder ein radial innerer Rand (12) der Torus-Wirbelkammer (20) nicht konzentrisch zu der Drehachse (6) der Bremsscheibe (4) ist, sondern unter einem Neigungswinkel (24; 25) geneigt ist.

10. Fahrzeugbremseinrichtung (1) mit
a) einer Fahrzeugbremse (2) mit einem an einem Bremssattel (7) gehaltenen Bremsbelag (9) und einer Bremsscheibe (4), wobei der Bremsbelag (9) mittels eines Aktuators (8) zur Erzeugung einer Bremswirkung gegen die Bremsscheibe (4) gedrückt werden kann, und
b) einer Fahrzeugbremsstaub-Sammeleinrichtung (3) nach einem der Ansprüche 1 bis 9, welche in Bewegungsrichtung (5) der Bremsscheibe (4) hinter der Fahrzeugbremse (2) angeordnet ist.

## Claims

1. A vehicle brake dust collecting device (3) for collecting and/or extracting brake dust in the region of a brake disc (4), comprising a housing (18) which has a gap-limiting surface (17) surrounding an interior space (16), **characterized by** a torus vortex chamber (20) which is arranged on the inside of the gap-limiting surface (17).

2. The vehicle brake dust collecting device (3) according to claim 1, **characterized in that**
a) in the torus vortex chamber (20) a vortex flow is formed with a superposition of a circumferential flow component (23) and a vortex flow component (26),
b) wherein the vortex flow component (26)
ba) is oriented in the direction of movement (5) of the brake disc (4) in an entry region (14) of the brake disc (4) into the housing (18), and
bb) is oriented opposite to the direction of movement (5) of the brake disc (4) in an exit region (15) of the brake disc (4) out of the housing (18).

3. The vehicle brake dust collecting device (3) according to claim 2, **characterized in that** the cross-section of the torus vortex chamber (20) is larger in the entry region (14) of the brake disc (4) into the housing (18) than in the exit region (15) of the brake disc (4) out of the housing (18).

4. The vehicle brake dust collecting device (3) according to claim 2, **characterized in that** a cross-section of a boundary (41) of the torus vortex chamber (20) at least in the entry region (14) of the brake disc (4) into the housing (18) and/or at least in the exit region (15) of the brake disc (4) out of the housing (18) is arc-shaped, concave-shaped or curved.

5. The vehicle brake dust collecting device (3) according to one of the preceding claims, **characterized in that** the cross-section of the torus vortex chamber (20), at least in the entry region (14) and/or in the exit region (15), has a closed edge in the direction of the brake disc (4) except for an opening (37, 38).

6. The vehicle brake dust collecting device (3) according to one of claims 1 to 4, **characterized in that** the torus vortex chamber (20)
a) has an opening (38) in the direction of the brake disc (4), and
b) has an opening (39) which is connected to a blowing-out device (31) or a suction device (30).

7. The vehicle brake dust collecting device (3) according to one of the claims 2-6, **characterized in that**
a) the torus vortex chamber (20) in the exit region (15) has a tongue or cutting edge which is arranged closely adjacent to the brake disc (4) and is oriented opposite to the direction of movement (5) of the brake disc (4), and/or
b) the torus vortex chamber (20) in the entry region (14) has a tongue or cutting edge which is arranged closely adjacent to the brake disc (4) and is oriented in the direction of movement of the brake disc (4).

8. The vehicle brake dust collecting device (3) according to one of the preceding claims, **characterized in that** a circumferential axis (40) of the torus vortex chamber (20), in a top view, in a rough approximation corresponds to the outer geometry of a circular ring segment.

9. The vehicle brake dust collecting device (3) according to one of the preceding claims, **characterized in that** a radially outer edge (13) and/or a radially inner edge (12) of the torus vortex chamber (20) is not concentric with the rotational axis (6) of the brake disc (4), but is inclined at an inclination angle (24; 25).

10. A vehicle brake device (1) comprising
a) a vehicle brake (2) with a brake pad (9) held on a brake caliper (7) and with a brake disc (4), wherein the brake pad (9) can be pressed against the brake disc (4) by means of an actuator (8) to generate a braking effect, and
b) a vehicle brake dust collecting device (3) according to one of claims 1 to 9, which is arranged downstream of the vehicle brake (2) in the direction of movement (5) of the brake disc (4).

## Revendications

1. Dispositif de collecte de poussière de freinage de véhicule (3) pour collecter et/ou aspirer la poussière de freinage dans la zone d'un disque de frein (4), avec un boîtier (18) qui présente une surface de limitation de fente (17) entourant un espace intérieur (16), **caractérisé par** une chambre de tourbillonnement torique (20) qui est agencée à l'intérieur de la surface de limitation de fente (17).

2. Dispositif de collecte de poussière de freinage de véhicule (3) selon la revendication 1, **caractérisé en ce que**
a) un écoulement tourbillonnaire avec une superposition d'une composante d'écoulement circonférentielle (23) et d'une composante d'écoulement tourbillonnaire (26) est formé dans la chambre de tourbillonnement torique (20),
b) la composante d'écoulement tourbillonnaire (26) étant orientée
ba) dans une zone d'entrée (14) du disque de frein (4) dans le boîtier (18), dans le sens de déplacement (5) du disque de frein (4) et
bb) dans une zone de sortie (15) du disque de frein (4) du boîtier (18), dans le sens opposé au sens de déplacement (5) du disque de frein (4).

3. Dispositif de collecte de poussière de freinage de véhicule (3) selon la revendication 2, **caractérisé en ce que** la section transversale de la chambre de tourbillonnement torique (20) dans la zone d'entrée (14) du disque de frein (4) dans le boîtier (18) est plus grande que dans la zone de sortie (15) du disque de frein (4) hors du boîtier (18).

4. Dispositif de collecte de poussière de freinage de véhicule (3) selon la revendication 2, **caractérisé en ce qu'au** moins dans la zone d'entrée (14) du disque de frein (4) dans le boîtier (18) et/ou au moins dans la zone de sortie (15) du disque de frein (4) hors du boîtier (18), une limitation (41) de la chambre de tourbillonnement torique (20) est réalisée en forme d'arc de cercle, concave ou courbe dans la section transversale.

5. Dispositif de collecte de poussière de freinage de véhicule (3) selon l'une des revendications précédentes, **caractérisé en ce que** la section transversale de la chambre de tourbillonnement torique (20) est conçue avec des bords fermés, au moins dans la zone d'entrée (14) et/ou dans la zone de sortie (15), à l'exception d'une ouverture (37, 38) en direction du disque de frein (4).

6. Dispositif de collecte de poussière de freinage de véhicule (3) selon l'une des revendications 1 à 4, **caractérisé en ce que** la chambre de tourbillonnement torique (20)
a) présente une ouverture (38) en direction du disque de frein (4) et
b) présente une ouverture (39) qui est reliée à un dispositif de soufflage (31) ou à un dispositif d'aspiration (30).

7. Dispositif de collecte de poussière de freinage de véhicule (3) selon l'une des revendications 2 à 6, **caractérisé en ce que**
a) la chambre de tourbillonnement torique (20) présente, dans la zone de sortie (15), une languette ou une arête agencée à proximité immédiate du disque de frein (4) et orientée dans le sens opposé au sens de déplacement (5) du disque de frein (4), et/ou
b) la chambre de tourbillonnement torique (20) présente, dans la zone d'entrée (14), une languette ou une arête qui est agencée à proximité immédiate du disque de frein (4) et qui est orientée dans le sens de déplacement du disque de frein (4).

8. Dispositif de collecte de poussière de freinage de véhicule (3) selon l'une des revendications précédentes, **caractérisé en ce qu'un** axe circonférentiel (40) de la chambre de tourbillonnement torique (20) correspond, dans une vue en plan, approximativement à la géométrie extérieure d'un segment d'anneau circulaire.

9. Dispositif de collecte de poussière de freinage de véhicule (3) selon l'une des revendications précédentes, **caractérisé en ce qu'un** bord radialement extérieur (13) et/ou un bord radialement intérieur (12) de la chambre de tourbillonnement torique (20) n'est pas concentrique à l'axe de rotation (6) du disque de frein (4), mais est incliné selon un angle d'inclinaison (24 ; 25).

10. Dispositif de freinage de véhicule (1) comprenant
a) un frein de véhicule (2) avec une garniture de frein (9) maintenue sur un étrier de frein (7) et un disque de frein (4), la garniture de frein (9) pouvant être pressée contre le disque de frein (4) au moyen d'un actionneur (8) afin de produire un effet de freinage, et
b) un dispositif de collecte de poussière de freinage de véhicule (3) selon l'une des revendications 1 à 9, qui est agencé derrière le frein de véhicule (2) dans le sens de déplacement (5) du disque de frein (4).
